# EUROPÄISCHE PATENTSCHRIFT

(11) **EP 1 783 002 B1**
(45) Veröffentlichungstag und Bekanntmachung des Hinweises auf die Patenterteilung: **06.01.2010**
(21) Anmeldenummer: 06021794.0
(22) Anmeldetag: 18.10.2006
(51) Int. Cl.: B60R 11/02

(54) **Befestigungsanordnung**
Fastening device
Dispositif de fixation

(30) Priorität: 02.11.2005 DE 102005052239
(43) Veröffentlichungstag der Anmeldung: 09.05.2007
(73) Patentinhaber: GM Global Technology Operations, Inc., Detroit, MI 48265-3000 (US)
(72) Erfinder: Stimper, Peter, 65589 Hadamar (DE)
(74) Vertreter: Daniel, Ulrich W.P.

(56) Entgegenhaltungen:
- US-A- 3 964 612
- US-A- 4 480 809
- US-A- 5 320 311
- US-A- 6 113 047
- US-A1- 2004 118 987

## Beschreibung

Die Erfindung liegt auf dem Gebiet der Fahrzeugmontagetechnik bzw. der Ausstattung von Kraftfahrzeugen mit insbesondere elektronischen und/oder elektrischen Komponenten, Aggregaten oder Bauteilen (nachfolgend verallgemeinert auch als Baugruppen bezeichnet) und betrifft eine Befestigungsanordnung zur lösbaren Befestigung einer Baugruppe an einem Fahrzeug.

In der Fahrzeugmontagetechnik sind verschiedenste Befestigungsprinzipien und -anordnungen bekannt, um in der Serienfertigung mit geringem Aufwand schnell, einfach, aber dennoch zuverlässig und präzise Baugruppen an der Fahrzeugkarosserie oder anderen Fahrzeugteilen zu befestigen.

Beispielsweise ist aus der EP 0 830 990 B1 eine Schnappbefestigung zum Fixieren eines Airbag-Moduls an einem z.B. lenkradseitigen Halter bekannt, die einen Zapfen mit radial nach außen federnden Fahnen umfasst. Die Fahnen federn im verbundenen Zustand hinter einer Schulter eines halterseitigen Aufnahmeringes auf und verrasten dadurch. Diese bekannte Befestigungsanordnung erfordert eine geradlinige Montage- oder Einsteckbewegung - für die bei den heute hohen Packungsdichten vor allem im Fahrzeugmotorraum häufig nicht der erforderliche Raum zur Verfügung steht - und ist nur vergleichsweise aufwändig lösbar.

Allgemein besteht in der Fahrzeugmontagetechnik die Anforderung, dass Verbindungen oder Befestigungen über eine lange Betriebsdauer und unter unterschiedlichsten Betriebsbedingungen äußerst zuverlässig, dennoch fest und insbesondere geräuschfrei sein müssen, insbesondere Klappergeräusche sind dabei höchst unerwünscht.

Weiterhin kann gefordert sein, dass - anders als bei der aus der EP 0 830 990 B1 bekannten, üblicherweise nicht zu lösenden Befestigung von Airbag-Modulen - in verschiedenen Einsatzfällen eine regelmäßige und aufwandsarme Demontage der Baueinheit möglich sein muss.

Aus dem US-A-4,480,409 ist ein Halter zur Drehlagerung eines Instrumentgehäuses bekannt. Dokument US-A-4,480,409 beschreibt alle Merkmale des Oberbegriffs des Anspruchs 1.

Vor diesem Hintergrund besteht die Aufgabe der vorliegenden Erfindung nun darin, eine Baueinheit zu Montage- bzw. Demontagezwecken in einem Halter zwischen einer Montageposition und einer betriebsbereiten Endposition einfach verschwenken zu können und dennoch in der Endposition eine sichere, feste und geräuschlose Befestigung bzw. Verbindung sicherzustellen.

Erfindungsgemäß wird diese Aufgabe durch eine Befestigungsanordnung mit den Merkmalen des Patentanspruchs 1 gelöst.

Demgemäß ist bei der Befestigungsanordnung ein fahrzeugseitig fixierbarer Halter mit zwei Halterungen vorgesehen, die in einer Drehachse liegende seitlich offene Aufnahmebohrungen aufweisen. An der Baueinheit sind zwei Drehzapfen angeordnet, die durch die seitlichen Öffnungen der Aufnahmebohrungen seitlich in die Aufnahmebohrungen einführbar sind. Die eingeführte Baueinheit nimmt so zunächst eine Montageposition ein - und zwar mit axialem Spiel gegenüber den Halterungen. Die Baueinheit ist durch Drehung um die Drehachse zwischen dieser Montageposition und einer Endposition verschwenkbar gelagert. Zumindest ein Drehzapfen weist eine Klemmeinrichtung mit mindestens einem Klemmelement auf, das sich beim Verschwenken der Baueinheit in die Endposition an die Halterung annähert.

Vorteilhafte Ausgestaltungen und Weiterbildungen der Erfindung sind Gegenstand der Unteransprüche sowie der Beschreibung unter Bezugnahme auf die Zeichnung.

Die der vorliegenden Erfindung zugrunde liegende Idee besteht also unter anderem darin, zunächst eine Aufnahme der Drehzapfen in den Aufnahmebohrungen mit erheblichem axialen Spiel zuzulassen, wodurch ein erleichtertes Einsetzen der Baueinheit möglich wird. Indem sich das Klemmelement bei der anschließenden Schwenkbewegung an die Halterung annähert wird der Spiel ermöglichende Spalt oder Abstand zwischen Drehzapfen bzw. am Drehzapfen angeordneten Anschlägen und Halterung(en) vermindert bzw. eliminiert. Dadurch ist in der Endposition eine feste, weitestgehend spielfreie Lagerung der Drehzapfen in axialer Richtung relativ zu den Halterschenkeln gewährleistet, so dass die Baueinheit fest und sicher und geräuschfrei in dem fahrzeugseitigen Halter gehalten ist.

Dabei ist insbesondere auch die Aufnahmebohrung so bemessen, dass diese gegenüber der Halterung radiales Spiel zulässt. Damit ist die Baueinheit bzw. sind die Drehzapfen auch an schwer zugänglichen Montageorten vergleichsweise einfach einzusetzen, weil durch das Spiel Fertigungstoleranzen und mangelnde Formtreue der korrespondierenden Verbindungselemente in einem weiten Rahmen ausgeglichen werden können. Bevorzugt kann die Baueinheit ein im Spritzguss hergestelltes Kunststoffgehäuse sein, an das die Drehzapfen und auch das bzw. die Klemmelemente in einem einzigen Herstellvorgang unmittelbar angespritzt sind.

Ein weiterer wesentlicher Vorteil der erfindungsgemäßen Befestigungsanordnung besteht darin, dass sie ohne zusätzlich zu montierende Konstruktionselemente auskommt. Damit sind auch bei der Demontage keine verlierbaren Teile vorhanden, so dass die erfindungsgemäße Befestigungsanordnung besonders für routinemäßig für Wartungs- oder Diagnosezwecke zu demontierende Baueinheiten geeignet ist.

Bevorzugt weist der Drehzapfen einen Drehzapfenkopf auf, an dem das Klemmelement angeordnet ist. Alternativ oder ergänzend kann der Drehzapfen an seinem Drehzapfenfuß, der auch mit dem Gehäuse der Baueinheit zusammenfallen kann, das Klemmelement oder ein weiteres, zusätzliches Klemmelement aufweisen.

Nach einer vorteilhaften Ausgestaltung der Erfindung umfasst das Klemmelement eine in Axialrichtung des Drehzapfens gesehen zur Halterung hin zulaufende schräge Fläche, die sich bei Drehung der Baueinheit entsprechend zunehmend an die Halterung anschmiegt.

Besonders bevorzugt können zwei in Axialrichtung des Drehzapfens gesehen vom Drehzapfenkopf bzw. vom Drehzapfenfuß aus zur Halterung hin aufeinander zulaufende Flächen vorgesehen sein, die bei Drehung der Baueinheit beiderseits sich zur Halterung hin verengen und diese somit gleichmäßig zwischen sich einklemmen.

Eine besonders feste Fixierung ergibt sich nach einer vorteilhaften Ausgestaltung der Erfindung, wenn die Klemmeinrichtung mindestens eine Quetschrippe aufweist, die beim Verschwenken der Baueinheit in die Endposition den Erstkontakt mit der jeweiligen Halterung bildet. Beim weiteren Verschwenken wird dann die Quetschrippe unter plastischer Verformung an die Halterung angedrückt, so dass gegebenenfalls auch ein letztes noch bestehendes Restspiel eliminiert wird.

Um die Baueinheit in der Endposition besonders vibrationsfest und zuverlässig zu halten, kann die Baueinheit bevorzugt ein Verriegelungselement aufweisen, das in der Endposition mit einem halterseitigen korrespondierenden Verriegelungselement zusammenwirkt.

Um in der Montageposition ein Arbeiten mit bzw. an der Baueinheit zu erleichtern, ist nach einer bevorzugten Ausgestaltung der Erfindung vorgesehen, dass die Baueinheit ein Verriegelungselement aufweist, das in der Montageposition mit einem halterseitigen korrespondierenden Verriegelungselement verriegelt.

Zum Einführen der Baueinheit in den Halter bzw. der Drehzapfen in die korrespondierenden Aufnahmebohrungen weisen die Drehzapfen bevorzugt gegenüberliegende mantelseitige Abflachungen auf, deren Abstand geringer als die Weite der seitlichen Öffnung bemessen ist und wobei der Querschnitt der Drehzapfen ansonsten weiter als die Weite der seitlichen Öffnung bemessen ist. Damit ist ein zuverlässiger Schutz gegen ein radiales Herausrutschen der Drehzapfen aus den Aufnahmebohrungen durch deren seitliche Öffnungen gewährleistet. Auch hier kann ein geringes Radialspiel des Drehzapfens gegenüber der jeweiligen Aufnahmebohrung vorgesehen sein, was die Montage und Handhabung der Baueinheit erheblich vereinfacht.

Besonders bevorzugt ist die Baueinheit ein elektrisches Verteilergehäuse, das während der Fahrzeugfabrikation in der Montageposition beispielsweise mit zu- und ableitenden Steckern oder Kabeln bestückt werden kann und das in dieser Position auch bei späteren betriebsgemäßen Wartungs- oder Diagnosearbeiten gut zugänglich ist und betriebsbereit in der Endposition sicher gehalten ist.

Die Erfindung wird nachfolgend anhand des in den schematischen Figuren der Zeichnung angegebenen Ausführungsbeispiels näher erläutert. Es zeigen dabei:
Figur 1 eine erfindungsgemäße Befestigungsanordnung in einer Montageposition;
Figur 2 die Befestigungsanordnung nach Figur 1 in einer Endposition;
Figur 3 einen Schnitt entlang einer Drehachse durch einen Drehzapfen;
Figur 4 einen Längsschnitt entlang der Linie IV-IV in Figur 3 und
Figur 5 eine perspektivische seitliche Teilansicht einer Baueinheit.

In allen Figuren der Zeichnung sind gleiche bzw. funktionsgleiche Elemente - sofern nichts anderes angegeben ist - mit denselben Bezugszeichen versehen worden.

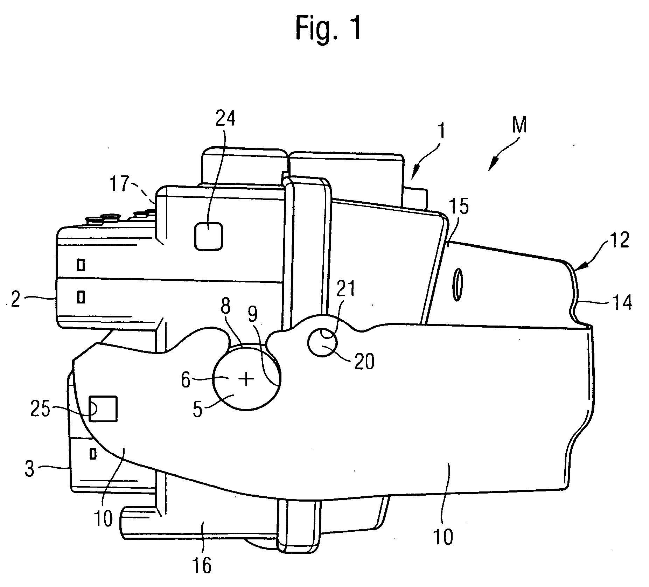

Figur 1 zeigt eine Baueinheit, die in diesem Beispiel von einem elektrischen Verteilergehäuse 1 gebildet ist, in einer Montageposition M. Das Verteilergehäuse weist mehrere Aufnahmen 2, 3 für noch nicht montierte und insoweit nicht dargestellte, elektrische Stecker auf. In der Montageposition können diese im Wesentlichen horizontal in die Aufnahmen 2, 3 in einfacher Weise eingeführt werden, obwohl beispielsweise die Zu- bzw. Ableitungen zu den Steckern vertikal verlaufen. Die Baueinheit 1 weist an ihren beiden Schmalseiten je einen Drehzapfen auf, von denen in der Darstellung in Figur 1 nur der zugewandte Drehzapfen 5 sichtbar ist. Der Drehzapfen hat einen Anschlag in Form eines stirnseitigen, scheibenförmigen Kopfbereichs 6. Der Drehzapfen ist über eine seitliche Öffnung 8 in eine Aufnahmebohrung 9 einer als Halteschenkel ausgebildeten Halterung 10 eingesetzt. Der Begriff Aufnahmebohrung ist im Rahmen der Erfindung weit zu verstehen und umfasst neben kreisförmigen Bohrungen auch andersartige Ausnehmungen.

Der Halteschenkel 10 ist Teil eines Halters 12, der im Wesentlichen eine Halterbasis 14 und eine weitere nur andeutungsweise erkennbare Halterung (Halterschenkel) 15 aufweist. Der im Wesentlichen U-förmig ausgebildete Halter umgreift also mit seinen beiden Halterschenkeln 10, 15 die beiden gegenüberliegenden Schmalseiten 16, 17 der Baueinheit, von denen in Figur 1 nur die vordere Schmalseite 16 explizit sichtbar ist. In der Montageposition ist ein halbkugelförmig ausgebildetes Verriegelungselement 20 von einer weiteren Aufnahme (Kreisbohrung) 21 des Halters 12 aufgenommen. Damit ist die Baueinheit 1 in der Montageposition stabilisiert, so dass die notwendigen Montagen oder Wartungsarbeiten ohne zusätzliche Lagesicherung ausgeführt werden können. Weiter ist an der Schmalseite 16 ein vierkantförmiges Verriegelungselement 24 erkennbar, das in seinen Abmessungen mit einer weiteren Ausnehmung oder Aufnahme 25 in dem Halterschenkel 10 korrespondiert.

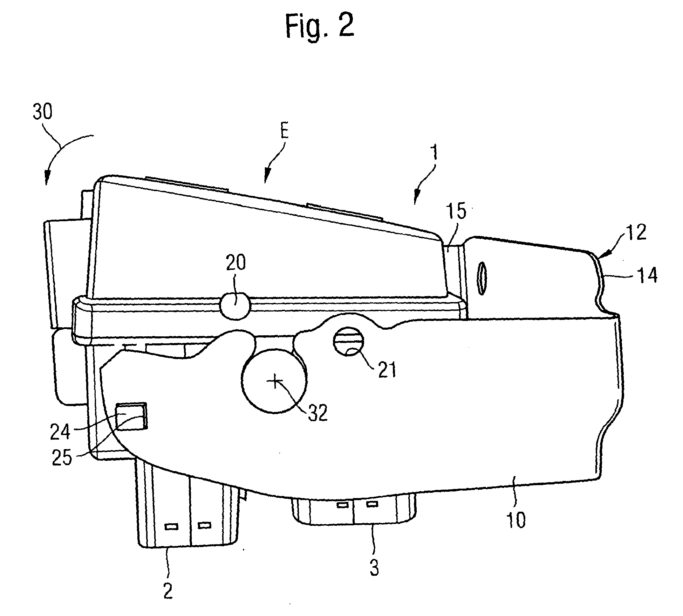

In der in Figur 2 gezeigten Endposition E der Baueinheit 1 sind die Verriegelungspartner 20, 21 entriegelt und die Verriegelungspartner 24, 25 dagegen in einer verriegelten Position. Die Endposition E hat die Baueinheit eingenommen, indem sie in Richtung des Drehpfeils 30 um ca. 90° verschwenkt worden ist. Diese Schwenkbewegung erfolgt um die durch die Drehzapfen 5 bzw. die Aufnahmebohrungen 9 definierte Drehachse 32. In der Endposition weisen die Aufnahme 2, 3 nach unten.

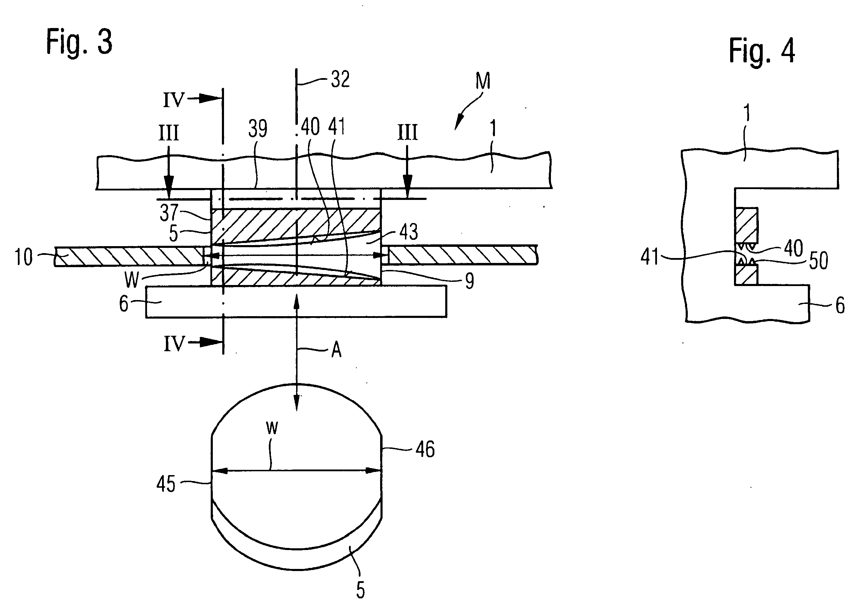

Figur 3 zeigt den Drehzapfen 5 im Längsschnitt und darunter in teilperspektivischer Ansicht den Querschnitt entlang der Linie III-III. Man erkennt den Halterschenkel 10, die angrenzende Baueinheit (Verteilergehäuse) 1 und den sich zwischen dem Kopfbereich 6 des Drehzapfens 5 und der Baueinheit 1 erstreckenden Lagerungsabschnitt 37 des Drehzapfens 5. Der Lagerungsabschnitt 37 ist in seiner axialen Erstreckung deutlich länger bemessen (beispielsweise zu 4,5 mm) als die Dicke des Halterschenkels 10 (beispielsweise 1 mm). Damit hat der Drehzapfen 5 (und entsprechend auch der auf der gegenüberliegenden Seite symmetrisch angebrachte Drehzapfen) in axialer Richtung A der Drehachse 32 erhebliches Spiel von - je nach Fertigungs- und Bauteiltoleranzen - ca. 3 mm. Dies erleichtert das Einsetzen der Baueinheit 1 in die Montageposition ganz erheblich.

Figur 3 lässt ferner ein erstes Klemmelement 38 in Form einer von dem Fußbereich 39 des Drehzapfens 5 aus auf den Halterschenkel 10 in Achsrichtung A zulaufenden schrägen Flächen 40 erkennen. Eine weitere schräge Fläche 41, die vom Kopfbereich 6 des Drehzapfens 5 ausgeht, nähert sich von der anderen Seite dem Halterschenkel 10 und bildet ein zweites Klemmelement 42. Damit ist zwischen den Flächen 40, 41 ein sich verjüngender Spalt 43 gebildet, in dem der Halterschenkel 10 aufgenommen ist. In der in Figur 3 gezeigten Montagestellung M ist die Weite w des Drehzapfens 5 erkennbar geringer als die Weite W der Aufnahmebohrung 9. Dazu sind - wie Figur 3 im unteren Teil zeigt - die seitlichen Mantelflächen 45, 46 des Drehzapfens abgeflacht. Bei einem Verschwenken der Baueinheit 1, d.h. bei einer Rotation um die Drehachse 32 laufen die Flächen 40, 41 auf den Halterschenkel 10 auf und klemmen diesen schließlich nach einer Drehung von ca. 90° zwischen sich fest ein. Damit ist das ursprünglich bestehende Spiel auf Null vermindert. In dieser Position sind besonders vorteilhaft auch die korrespondierenden Verriegelungspartner 24, 25 (aufgrund elastischer Verformbarkeit des Halterschenkels 10) nur noch mit sehr geringem Spiel zueinander angeordnet, so dass nur geringe und damit vor allem für das spritzgussgeformte Verriegelungselement 24 schonende Auslenkungen zur Entriegelung erforderlich sind.

Wie Figur 4 zeigt, können zum vollständigen Ausschluss jeglichen Spiels die Flächen 40, 41 bevorzugt mit Quetschrippen 50 versehen sein. Diese gelangen bei der Schwenkbewegung der Baueinheit als Erstes mit der Oberfläche des Halterschenkels 10 in Kontakt, deformieren sich dabei und sorgen so für eine besonders spielfreie Lagerung. Eine entsprechende Ausgestaltung und damit entsprechende Funktionen weist der (nicht sichtbare) Drehzapfen an der gegenüberliegenden Schmalseite 17 auf.

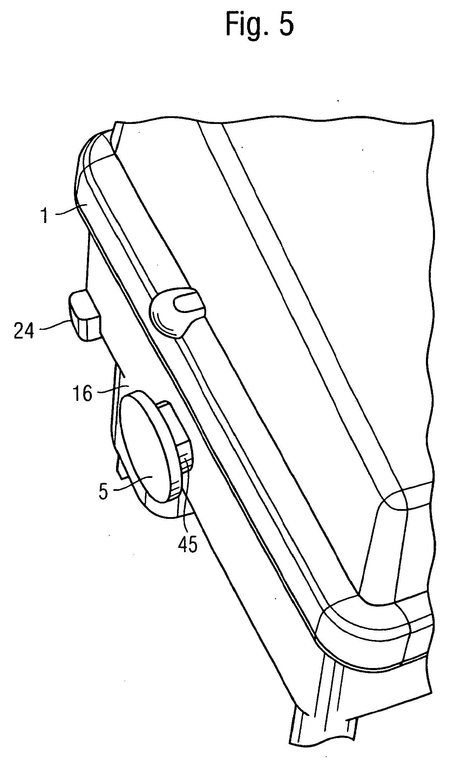

Zur abschließenden Darstellung ist in Figur 5 die Ausgestaltung des Drehzapfens 5 nochmals in einer teilperspektivischen Ansicht der Baueinheit 1 gezeigt. Ferner ist das Verriegelungselement 25 an der Schmalseite 16 deutlich zu erkennen. Die Abflachung 45 des Drehzapfens verläuft hier annähernd waagerecht, weil die Baueinheit in dieser Darstellung im Wesentlichen in der Endposition E (unter Weglassung des Halters 12) gezeigt ist.

Obgleich die vorliegende Erfindung vorstehend anhand bevorzugter Ausführungsbeispiele beschrieben wurde, ist sie nicht darauf beschränkt, sondern auf vielfältige Art und Weise modifizierbar, ohne dass vom grundlegenden Prinzip der Erfindung abgewichen wird.

### Bezugszeichenliste

- A: axialer Richtung
- E: Endposition
- M: Montageposition
- w: Weite
- W: Weite
- 1: Baueinheit
- 2: Aufnahme
- 3: Aufnahme
- 5: Drehzapfen
- 6: Kopfbereich
- 8: Öffnung
- 9: Aufnahmebohrung
- 10: Halterung
- 12: Halter
- 14: Halterbasis
- 15: Halterung
- 16: Schmalseite
- 17: Schmalseite
- 20: Verriegelungselement
- 21: Aufnahme
- 24: Verriegelungselement
- 25: Aufnahme
- 30: Drehpfeil
- 32: Drehachse
- 37: Lagerungsabschnitt
- 38: Klemmelement
- 39: Fußbereich
- 40: schräge Fläche
- 41: schräge Fläche
- 42: Klemmelement
- 43: Spalt
- 45: Mantelfläche
- 46: Mantelfläche
- 50: Quetschrippe

## Patentansprüche

1. Befestigungsanordnung zur lösbaren Befestigung einer Baueinheit (1) an einem Fahrzeug mit
- einem fahrzeugseitig fixierbaren Halter (12) mit zwei Halterungen (10, 15), die in einer Drehachse (32) liegende seitlich offene Aufnahmebohrungen (9) aufweisen,
- mit zwei an der Baueinheit (1) angeordneten Drehzapfen (5), die durch die seitlichen Öffnungen (8) der Aufnahmebohrungen (9) in diese mit Axialspiel gegenüber den Halterungen (10, 15) einführbar sind, so dass die Baueinheit (1) zunächst eine Montageposition (M) einnimmt und durch Drehung um die Drehachse (32) zwischen der Montageposition (M) und einer Endposition (E) verschwenkbar gelagert ist, **dadurch gekennzeichnet daß**
zumindest ein Drehzapfen (5) eine Klemmeinrichtung mit mindestens einem Klemmelement (38) aufweist, das sich beim Verschwenken in die Endposition (E) an die Halterung (10) annähert und dadurch das Axialspiel eliminiert.

2. Befestigungsanordnung nach Anspruch 1,
wobei der Drehzapfen (5) einen Drehzapfenkopf (6) aufweist, an dem das Klemmelement (38) angeordnet ist.

3. Befestigungsanordnung nach Anspruch 1 oder 2,
wobei im Bereich des Drehzapfenfußes (39) das Klemmelement oder ein weiteres Klemmelement (42) angeordnet ist.

4. Befestigungsanordnung nach Anspruch 1, 2 oder 3
wobei die Klemmeinrichtung eine in Axialrichtung (A) des Drehzapfens (5) gesehen zur Halterung (10) hin zulaufende schräge Fläche (40) umfasst.

5. Befestigungsanordnung nach Anspruch 3 oder 4,
wobei die Klemmeinrichtung zwei in Axialrichtung (A) des Drehzapfens (5) gesehen vom Drehzapfenkopf (6) bzw. vom Drehzapfenfuß (39) aus zur Halterung (10) hin aufeinander zulaufende Flächen (40, 41) umfasst.

6. Befestigungsanordnung nach einem der vorangehenden Ansprüche,
wobei die Klemmeinrichtung mindestens eine Quetschrippe (50) aufweist, die beim Verschwenken der Baueinheit (1) in die Endposition (E) in Kontakt mit der jeweiligen Halterung (10) kommt.

7. Befestigungsanordnung nach einem der vorangehenden Ansprüche,
wobei die Baueinheit (1) ein Verriegelungselement (20) aufweist, das in der Montageposition (M) mit einem halterseitigen korrespondierenden Verriegelungselement (21) verriegelt.

8. Befestigungsanordnung nach einem der vorangehenden Ansprüche,
wobei die Baueinheit (1) ein Verriegelungselement (24) aufweist, das in der Endposition (E) mit einem halterseitigen korrespondierenden Verriegelungselement (25) verriegelt.

9. Befestigungsanordnung nach einem der vorangehenden Ansprüche,
wobei der Drehzapfen (5) gegenüberliegende mantelseitige Abflachungen (45, 46) aufweist, deren Abstand (w) geringer als die Weite (W) der seitlichen Öffnung (8) bemessen ist und wobei der Drehzapfenquerschnitt ansonsten weiter als die Weite der seitlichen Öffnung bemessen ist.

10. Befestigungsanordnung nach einem der vorangehenden Ansprüche, wobei
die Baueinheit (1) ein elektrisches Verteilergehäuse ist.

## Claims

1. A fastening configuration for the removable fastening of a module (1) on a vehicle having
- a vehicle-side fixable retainer (12) having two mounts (10, 15), which have laterally open receptacle holes (9) lying in a rotational axis (32),
- having two pivot pins (5), which are situated on the module (1), and which are insertable through the lateral openings (8) of the receptacle holes (9) therein with axial play relative to the mounts (10, 15), so that the module (1) initially assumes an installation position (M) and is mounted so it is pivotable by rotation around the rotation axis (32) between the installation position (M) and a final position (E),
**characterized in that** at least one pivot pin (5) has a clamping unit having at least one clamping element (38), which approaches the mount (10) upon pivoting into the final position (E) and thus eliminates the axial play.

2. The fastening configuration according to Claim 1,
wherein the pivot pin (5) has a pivot pin head (6), on which the clamping element (38) is situated.

3. The fastening configuration according to Claim 1 or 2,
wherein the clamping element or a further clamping element (42) is situated in the area of the pivot pin base (39).

4. The fastening configuration according to Claim 1, 2, or 3,
wherein the clamping unit has an inclined face (40) tapering toward the mount (10) viewed in the axial direction (A) of the pivot pin (5).

5. The fastening configuration according to Claim 3 or 4,
wherein the clamping unit has two faces (40, 41) tapering toward one another toward the mount (10) from the pivot pin head (6) or from the pivot pin base (39), respectively, viewed in the axial direction (A) of the pivot pin (5).

6. The fastening configuration according to one of the preceding claims,
wherein the clamping unit has at least one flexible clip (50), which comes into contact with the particular mount (10) upon pivoting of the module (1) into the final position (E).

7. The fastening configuration according to one of the preceding claims,
wherein the module (1) has a locking element (20), which locks with a corresponding locking element (21) on the mount side in the installation position (M).

8. The fastening configuration according to one of the preceding claims,
wherein the module (1) has a locking element (24), which locks with a corresponding locking element (25) on the mount side in the final position (E).

9. The fastening configuration according to one of the preceding claims,
wherein the pivot pin (5) has diametrically opposite jacket-side flattened areas (45, 46), whose spacing (w) is dimensioned smaller than the width (W) of the lateral opening (8), and the pivot pin cross-section is otherwise dimensioned wider than the width of the lateral opening.

10. The fastening configuration according to one of the preceding claims,
wherein the module (1) is an electrical distributor housing.

## Revendications

1. Dispositif de fixation destiné à fixer un ensemble (1) de manière démontable à un véhicule, comportant
- un support (12) pouvant être fixé sur le véhicule, avec deux fixations (10, 15) présentant des alésages (9) situés dans un axe de rotation (32) et ouverts sur le côté,
- deux tourillons (5) disposés sur ledit ensemble (1), qui peuvent être introduits dans ledit ensemble à travers les orifices latéraux (8) desdits alésages (9) avec un jeu axial par rapport auxdites fixations (10, 15) de manière à ce que ledit ensemble (1) prenne d'abord une position de montage (M) et soit positionné, en tournant autour dudit axe de rotation (32), de sorte à pouvoir pivoter entre ladite position de montage (M) et une position finale (E),
**caractérisé en ceci que**
au moins un desdits tourillons (5) présente un dispositif de serrage comportant au moins un élément de serrage (38), qui, lors du pivotement en position finale (E), s'approche de ladite fixation (10) et élimine ainsi ledit jeu axial.

2. Dispositif de fixation selon la revendication 1,
ledit tourillon (5) présentant une tête de tourillon (6) sur laquelle est disposé ledit élément de serrage (38).

3. Dispositif de fixation selon la revendication 1 ou 2,
au niveau du pied de tourillon (39), étant disposé ledit élément de serrage ou un élément de serrage supplémentaire (42).

4. Dispositif de fixation selon la revendication 1, 2 ou 3,
ledit dispositif de serrage comportant une surface (40) oblique, dirigée dans le sens axial (A) dudit tourillon (5), vue vers ladite fixation (10).

5. Dispositif de fixation selon la revendication 3 ou 4,
ledit dispositif de serrage comportant deux surfaces (40, 41), dirigées l'une vers l'autre dans le sens axial (A) dudit tourillon (5), vues à partir de ladite tête de tourillon (6) ou bien dudit pied de tourillon (39) vers ladite fixation (10).

6. Dispositif de fixation selon l'une des revendications précédentes,
ledit dispositif de serrage présentant au moins une clavette compressible (50), qui, lors du pivotement dudit ensemble (1) en position finale (E), entre en contact avec la fixation (10) correspondante.

7. Dispositif de fixation selon l'une des revendications précédentes,
ledit ensemble (1) présentant un élément de verrouillage (20), qui, en position de montage (M), se verrouille avec un élément de verrouillage (21) correspondant sur le côté support.

8. Dispositif de fixation selon l'une des revendications précédentes,
ledit ensemble (1) présentant un élément de verrouillage (24), qui, en position finale (E), se verrouille avec un élément de verrouillage (25) correspondant sur le côté support.

9. Dispositif de fixation selon l'une des revendications précédentes,
ledit tourillon (5) présentant des aplatissements (45, 46) sur le côté enveloppe, opposés l'un à l'autre, dont l'écart (w) est dimensionné nettement inférieur au diamètre (W) dudit orifice latéral (8), et la section du tourillon étant par ailleurs dimensionné plus grande que le diamètre de l'orifice latéral.

10. Dispositif de fixation selon l'une des revendications précédentes,
ledit ensemble (1) étant une boîte de distribution électrique.
